# EUROPEAN PATENT SPECIFICATION

(11) **EP 1 561 193 B1**
(45) Date of publication and mention of the grant of the patent: **10.09.2014**
(21) Application number: 03775360.5
(22) Date of filing: 14.11.2003
(51) Int. Cl.: G09B 5/00

(54) **VERSIONING ELECTRONIC LEARNING OBJECTS**
VERSIONIERUNG ELEKTRONISCHER LERNOBJEKTE
VERSIONNAGE D'OBJETS D'APPRENTISSAGE ELECTRONIQUE

(30) Priority: 15.11.2002 US 426346 P
(43) Date of publication of application: 10.08.2005
(73) Proprietor: SAP AG, 69190 Walldorf (DE)
(72) Inventor: THEILMANN, Wolfgang, 76139 Karlsruhe (DE); ALTENHOFEN, Michael, 76131 Karlsruhe (DE); GERTEIS, Wolfgang, 76228 Karlsruhe (DE)
(74) Representative: Müller-Boré & Partner Patentanwälte PartG mbB
(86) International application number: PCT/EP2003/012761
(87) International publication number: WO 2004/047048

(56) References cited:
- GB-A- 2 373 625
- US-A- 5 675 802
- US-A- 6 134 552
- US-B1- 6 430 563
- DANIEL LIPKIN: "Universal Learning Format Technical Specification" TECHNOLOGY REPORTS, [Online] 13 January 2001 (2001-01-13), - 13 January 2001 (2001-01-13) pages 1-3, XP002290517 Retrieved from the Internet: URL:http://xml.coverpages.org/ulf.html> [retrieved on 2004-07-29]

## Description

### BACKGROUND

This patent application relates generally to an electronic learning system and, more particularly, to maintaining two or more different versions of the same object for use in the electronic learning system.

Electronic learning systems provide users with the ability to access course content directly from their computers, without the need for intermediaries, such as teachers, tutors, and the like. Such systems have proven attractive for precisely this reason.

The uniform approach of many electronic learning systems, however, can be a hindrance to many users. In particular, electronic learning systems often lack the flexibility required to provide an individualized learning experience.

GB 2 373 625 A discloses a content object for a learning module course or program produced by providing a repository of media objects and metadata for each media object. Further disclosed is selecting a plurality of media objects and their metadata from the repository and producing metadata for the selection of media objects. The metadata can be used to describe all the characteristics of the learning material and the learning experience obtainable using the material in specified ways.

US 6,420,563 (Fritz, 2002) discloses a method for storage and management of multiple versions and context variants of documents in a multi-user environment via a three-tiered content system/model. It utilizes three classes consisting of logical objects, physical objects, and components that contain administrative data associated with physical objects. The physical objects that belong to the same logical object (a collection) may be context specific variants (based on content, format, language, etc.) of each other, or related by a different criteria.

US 5,675,802 (Allen, 1997) discloses data processing system and for controlling files at a local development site within a geographically distributed multisite software development project. The system includes a storage device, a processor, and a mastership enforcer. The storage device stores a local replica including a plurality of files. Each file comprises a plurality of branches, and each branch comprises a plurality of versions of the file. The processor executes instructions, and retrieves and stores versions of the files in the storage device. The mastership enforcer provides the processor with the exclusive capability to modify specific branches by adding new versions of target files as determined by multisite mastership rules.

### SUMMARY

The invention is defined in the independent claims. Particular embodiments are subject of the dependent claims.

In general, in one aspect, an electronic learning system (ELS) and a method being implemented in an electronic learning system manage versioned learning objects in a master repository and in a local repository. The ELS and the method includes detecting a version conflict associated with a learning object, and resolving the conflict. By using versioned learning objects, the ELS and the method provides flexibility to learners. By detecting and resolving conflicts, consistency is ensured throughout the electronic learning system.

The local repository may be divided into workspaces. Each of the workspaces may include alternate versions of the learning objects stored in the master repository. Learning objects stored in one workspace do not reference learning objects stored in another workspace. Detecting and resolving is performed at check-in of the alternate version of the learning object to the master repository. The processor may create the alternate version of the learning object by either (a) copying the existing version of the learning object from the master repository to the local repository, or (b) generating an alternate object in the local repository (i.e., a new object for which a version is not already in the master repository).

Other features and advantages will be apparent from the description, the drawings, and the claims.

### DESCRIPTION OF THE DRAWINGS

Fig. 1 is a content aggregation model in an electronic learning system.
Fig. 2 is an example of an ontology of knowledge types for electronic learning.
Fig. 3 is an example of a course graph for electronic learning.
Fig. 4 is an example of a sub-course graph for electronic learning.
Fig. 5 is an example of a learning unit graph for electronic learning.
Fig. 6 is a block diagram of an architecture for the electronic learning system.
Fig. 7 is an example of a diagram of a file system on a local repository that uses explicit versioning.
Fig. 8 is a block diagram of learning objects that illustrates a cascading conflict resolution scenario.
Fig. 9 is a block diagram of learning objects that illustrates a version conflict at check-in to a master repository.
Fig. 10 is a block diagram of learning objects that illustrates the need for proxy conflict resolutions.
Figs. 11 to 20 are screen shots showing windows generated by a repository explorer used with the electronic learning system.

Like reference numerals in different figures indicate like elements.

### DETAILED DESCRIPTION

### Course Content And Structure

The electronic learning system ("ELS") described herein structures course material (i.e., content) so that the content is reusable and flexible. The content structure allows an author of a course to reuse existing content to create new or additional courses. In addition, the content structure provides flexible content delivery that may be adapted to the learning styles of different users, thereby providing an individualized learning experience.

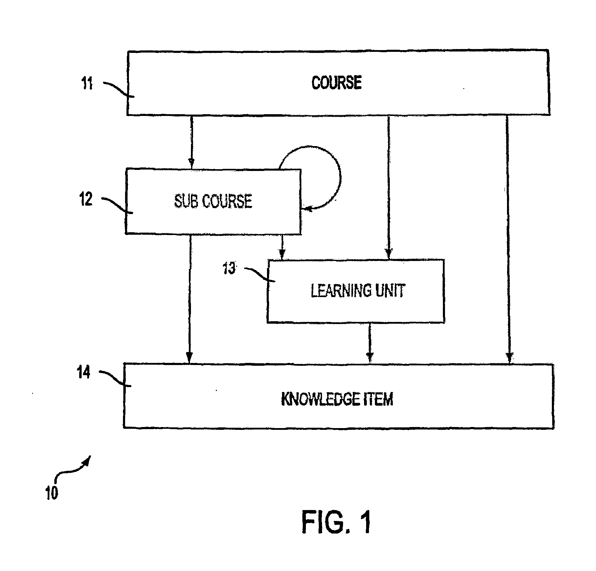

Electronic learning content in the ELS may be aggregated using a number of learning objects arranged at different aggregation levels. Each higher-level learning object may refer to any learning object at a lower level. At its lowest level, a learning object corresponds to content and is not further divisible. In one implementation of the ELS shown in Fig. 1, course material 10 may include four types of learning objects: a course 11, a sub-course 12, a learning unit 13, and a knowledge item 14.

Starting from the lowest level, knowledge items 14 are the basis for the other learning objects and are the building blocks of the course content structure. Each knowledge item 14 may include content that illustrates, explains, practices, or tests an aspect of a thematic area or topic. Knowledge items 14 typically are small in size (i.e., of short duration, e.g., approximately five minutes or less).

Attributes may be used to describe a knowledge item 14, such as, for example, a name, a type of media, and a type of knowledge. The name may be used by the ELS to identify and locate the content associated with a knowledge item 14. The type of media describes the form of the content that is associated with the knowledge item 14. For example, media types include a presentation type, a communication type, and an interactive type. A presentation media type may include text, a table, an illustration, graphics, an image, animation, an audio clip, and/or a video clip. A communication media type may include a chat session, a group (e.g., a newsgroup, team, class, and group of peers), electronic mail, a short message service (SMS), and an instant message. An interactive media type may include a computer based training tool, a simulation, and a test.

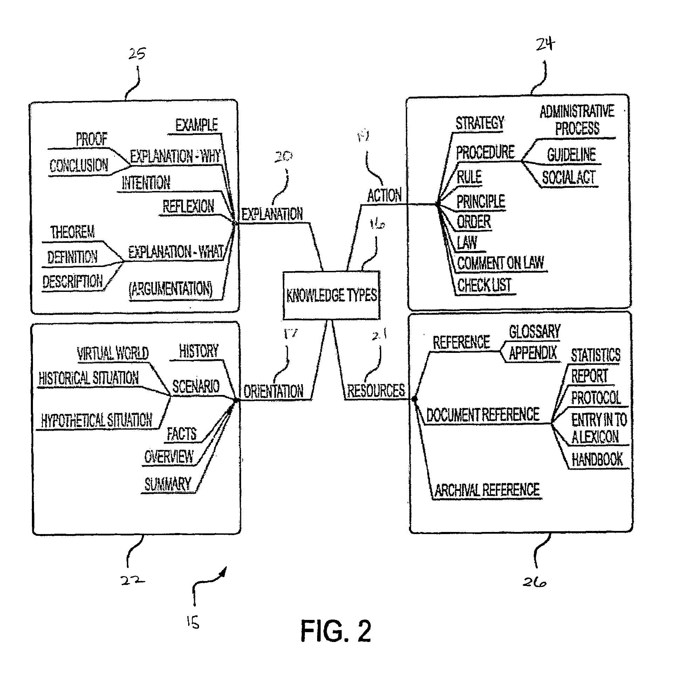

A knowledge item 14 also may be described by the attribute of knowledge type. For example, knowledge types include knowledge of orientation, knowledge of action, knowledge of explanation, and knowledge of source/reference (see Fig. 2). Knowledge types may differ in learning goal and content. For example, knowledge of orientation offers a point of reference to the user, and, therefore, provides general information for a better understanding of the structure of interrelated learning objects.

Knowledge items 14 may be generated using a wide range of technologies. In one implementation, a browser (including plug-in applications) interprets and displays appropriate file formats associated with each knowledge item. For example, markup languages (such as a Hypertext Markup language (HTML), a standard generalized markup language (SGML), a dynamic HTML (DHTML), or an extensible markup language (XML)), JavaScript (a client-side scripting language), and/or Flash may be used to create knowledge items 14.

HTML may be used to describe the logical elements and presentation of a document, such as, for example, text, headings, paragraphs, lists, tables, or image references. Flash may be used as a file format for Flash movies and as a plug-in for playing Flash files in a browser. For example, Flash movies using vector and bitmap graphics, animations, transparencies, transitions, MP3 audio files, input forms, and interactions may be used. In addition, Flash permits pixel-precise positioning of graphical elements to generate interactive applications for presentation of course material to a user.

Learning units 13 may be assembled using one or more knowledge items 14 to represent, for example, a distinct, thematically-coherent unit. Consequently, learning units 13 may be considered containers for knowledge items 14 of the same general topic. Learning units 13 also may be relatively small in size (i.e., small in duration) though larger than a knowledge item 14.

Sub-courses 12 may be assembled using other sub-courses 12, learning units 13, and/or knowledge items 14. Sub-course 12 may be used to split up an extensive course into several smaller subordinate courses. Sub-courses 12 may be used to build an arbitrarily deep nested structure by referring to other sub-courses 12.

Courses may be assembled from all of the subordinate learning objects including sub-courses 12, learning units 13, and knowledge items 14. To foster maximum reuse, all learning objects may be self-contained and context free.

Learning objects may be tagged with metadata that is used to support adaptive delivery, reusability, and search/retrieval of content associated with the learning objects. For example, learning objective metadata (LOM) defined by the IEEE "Learning Object Metadata Working Group" may be attached to individual learning objects. A learning objective is information that is to be imparted by an electronic course, or a subset thereof, to a user taking the electronic course. The learning objective metadata noted above may represent numerical identifiers that correspond to learning objectives. The metadata may be used to configure an electronic course based on whether a user has met learning objectives associated with learning object(s) that make up the course.

Other metadata identifies the "version" of the object using an identifier, such as a number. Object versions and their use are described in more detail below. Still other metadata may relate to a number of knowledge types (e.g., orientation, action, explanation, and resources) that may be used to categorize learning objects.

In this regard, as shown in Fig. 2, learning objects may be categorized using a didactical ontology 15 of knowledge types 16 that includes orientation knowledge 17, action knowledge 19, explanation knowledge 20, and resource knowledge 21. Orientation knowledge 17 helps a user to find the way through a topic without acting in a topic-specific manner and may be referred to as "know what". Action knowledge 19 helps a user to acquire topic related skills and may be referred to as "know how". Explanation knowledge 20 provides a user with an explanation of why something is the way it is and may be referred to as "know why". Resource knowledge 21 teaches a user where to find additional information on a specific topic and may be referred to as "know where".

The four knowledge types (orientation, action, explanation, and resource) may be further divided into a fine grained ontology as shown in Fig. 2. Orientation knowledge 17 may refer to sub-types 22 (of knowledge) that include a history, a scenario, a fact, an overview, and a summary. Action knowledge 19 may refer to sub-types 24 that include a strategy, a procedure, a rule, a principle, an order, a law, a comment on law, and a checklist. Explanation knowledge 20 may refer to sub-types 25 that include an example, an intention, a reflection, an explanation of why or what, and an argumentation. Resource knowledge 21 may refer to sub-types 26 that include a reference, a document reference, and an archival reference.

Dependencies (or "references") between learning objects may be described by metadata in the learning objects. A relation may be used to describe a natural, subject-taxonomic relation between learning objects. A relation may be directional or nondirectional. A directional relation may indicate that the relation between learning objects is true only in one direction. Directional relations should be followed. Relations may be divided into two categories: subject-taxonomic and non-subject taxonomic.

Subject-taxonomic relations may be divided into hierarchical relations and associative relations. Hierarchical relations may be used to express a relation between learning objects that have a relation of subordination or superordination. For example, a hierarchical relation between knowledge items A and B exists if B is part of A. Hierarchical relations may be divided into two categories: the part/whole relation (i.e., "has part") and the abstraction relation (i.e., "generalizes"). For example, the part/whole relation "A has part B" describes that B is part of A. The abstraction relation "A generalizes B" implies that B is a specific type of A (e.g., an aircraft generalizes a jet or a jet is a specific type of aircraft).

Associative relations may be used to refer to a kind of relation of relevancy between two learning objects. Associative relations may help a user obtain a better understanding of facts associated with the learning objects. Associative relations describe a manifold relation between two learning objects and are mainly directional (i.e., the relation between learning objects is true only in one direction). Examples of associative relations, described below, include "determines", "side-by-side", "alternative to", "opposite to", "precedes", "context of", "process of"," "values", "means of", and "affinity".

The "determines" relation describes a deterministic correlation between A and B (e.g., B causally depends on A). The "side-by-side" relation may be viewed from a spatial, conceptual, theoretical, or ontological perspective (e.g., A side-by-side with B is valid if both knowledge objects are part of a superordinate whole). The side-by-side relation may be subdivided into relations, such as "similar to", "alternative to", and "analogous to". The "opposite to" relation implies that two learning objects are opposite in reference to at least one quality. The "precedes" relation describes a temporal relationship of succession (e.g., A occurs in time before B (and not that A is a prerequisite of B)). The "context of" relation describes the factual and situational relationship on a basis of which one of the related learning objects may be derived. An "affinity" between learning objects suggests that there is a close functional correlation between the learning objects (e.g., there is an affinity between books and the act of reading because reading is the main function of books).

Non Subject-Taxonomic relations may include the relations "prerequisite of" and "belongs to". The "prerequisite of" and the "belongs to" relations do not refer to the subject-taxonomic interrelations of the knowledge to be imparted. Instead, these relations refer to progression of the course in the learning environment (e.g., as the user traverses the course). The "prerequisite of" relation is directional whereas the "belongs to" relation is nondirectional. Both relations may be used for knowledge items 14 that cannot be further subdivided. For example, if the size of a screen is too small to display the entire content on one page, the page displaying the content may be split into two pages that are connected by the relation "prerequisite of".

Another type of metadata defines competencies. Competencies may be assigned to learning objects, such as, for example, a sub-course 12 or a learning unit 13. Competencies may be used to indicate and evaluate the performance of a user as the user traverses the course material. A competency may be classified as a cognitive skill, an emotional skill, a sensory motor skill, or a social skill.

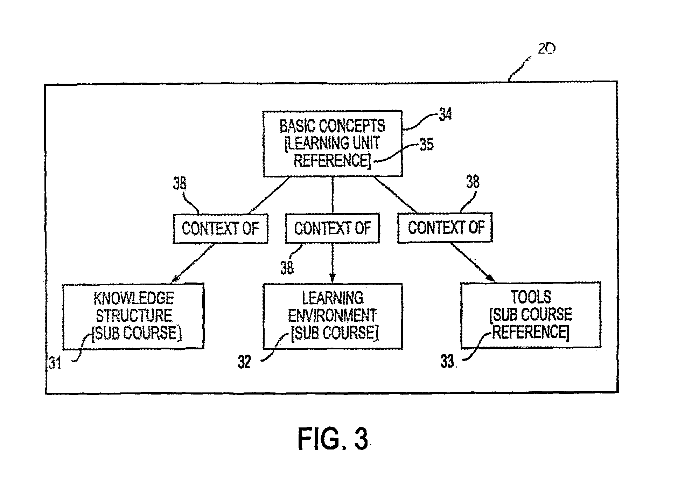

The content structure associated with a course may be represented as a set of graphs. A learning object may be represented as a node in a graph. Node attributes are used to convey the metadata attached to the corresponding learning object (e.g., a name, a knowledge type, a version number, a competency, and/or a media type). A relation between two learning objects may be represented as an edge. For example, Fig. 3 shows a graph 20 for a course. The course is divided into four learning objects or nodes (31, 32, 33, and 34): three sub-courses (e.g., knowledge structure, learning environment, and tools) and one learning unit (e.g., basic concepts).

A node attribute 35 of each node is shown in brackets (e.g., node 34 labeled "Basic concepts" has an attribute that identifies it as a reference to a learning unit). In addition, an edge 38 expressing the relation "context of" has been specified for the learning unit with respect to each of the sub-courses. As a result, the basic concepts explained in the learning unit provide the context for the concepts covered in the three sub-courses.

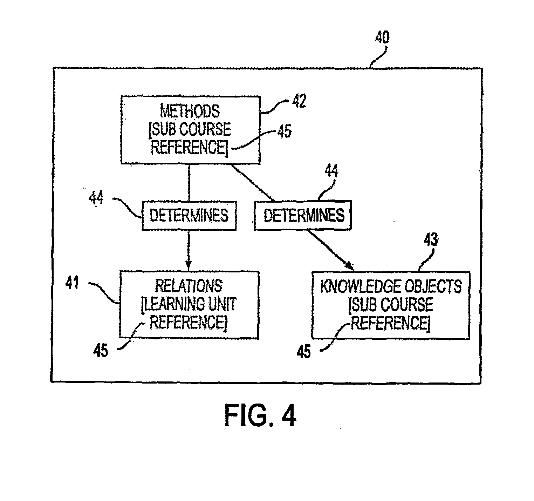

Fig. 4 shows a graph 40 of the sub-course "Knowledge structure" 31 of Fig. 3. In this example, the sub-course "Knowledge structure" is further divided into three nodes (41,42, and 43): a learning unit (e.g., on relations) and two sub-courses (e.g., covering the topics of methods and knowledge objects). Edges 44 expressing the relation "determines" are provided between the learning objects (e.g., the sub-course "Methods" determines the sub-course "Knowledge objects" and the learning unit "Relations"). In addition, the attribute 45 of each node is shown in brackets (e.g., nodes "Methods" and "Knowledge objects" have the attribute identifying them as references to other sub-courses; node "Relations" has the attribute of being a reference to a learning unit).

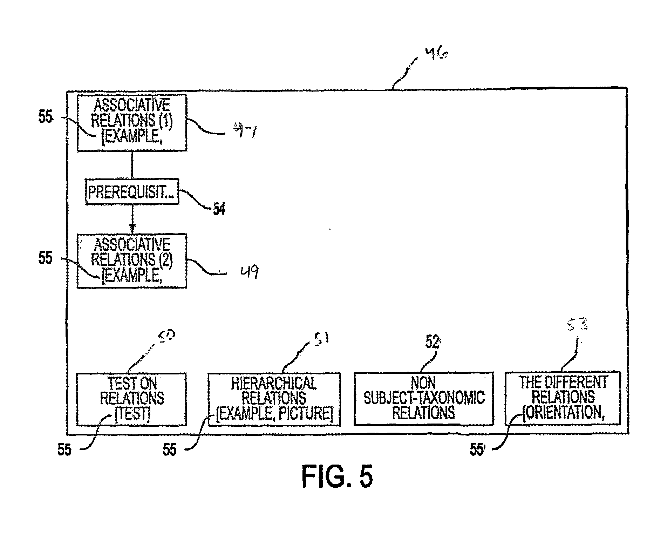

Fig. 5 shows a graph 46 for the learning unit "Relations" 41 shown in Fig. 4. The learning unit includes six nodes (47, 49, 50, 51, 52, and 53): six knowledge items (i.e., "Associative relations (1)", "Associative relations (2)", "Test on relations", "Hierarchical relations", "Non subject-taxonomic relations", and "The different relations"). An edge 54 expressing the relation "prerequisite" has been provided between the knowledge items "Associative relations (1)" and "Associative relations (2)." In addition, attributes 55 of each node are specified in brackets (e.g., the node 51 "Hierarchical relations" includes the attributes "Example" and "Picture").

### Electronic Learning Strategies

The above-described content aggregation and structure associated with a course does not automatically enforce any sequence that a user may use to traverse content associated with the course. As a result, different sequencing rules may be applied to the same course structure to provide different paths through the course. The sequencing rules applied to the knowledge structure of a course constitute learning strategies. The learning strategies may be used to pick specific learning objects to be suggested to the user as the user progresses through the course. The user may select from a number of different learning strategies while taking a course. In turn, the selected learning strategy considers both the requirements of the course structure and the preferences of the user.

In a traditional classroom, a teacher determines the learning strategy that is used to learn course material. For example, in this context the learning progression may start with a course orientation, followed by an explanation (with examples), an action, and practice. Using the ELS, a user may choose between one or more learning strategies to determine which path to take through an electronic course. As a result, progressions of different users through the course may differ.

### Course Configuration

The structure of a course is made up of graphs of the learning objects. A navigation tree may be determined from the graphs by applying a selected learning strategy to the graphs. The navigation tree may be used to navigate a path through the course for the user. Only parts of the navigation tree may be displayed to the user at the learning portal based on the position of the user within the course.

Learning strategies are applied to static course structure including learning objects (nodes), metadata (attributes), and relations (edges). This data is created when the course structure is determined (e.g., by a course author). Once the course structure is created, the course player processes the course structure using a strategy to present the material to the user at the learning portal. The course may be custom-tailored to a user's needs either before or during presentation of the materials.

### Architecture

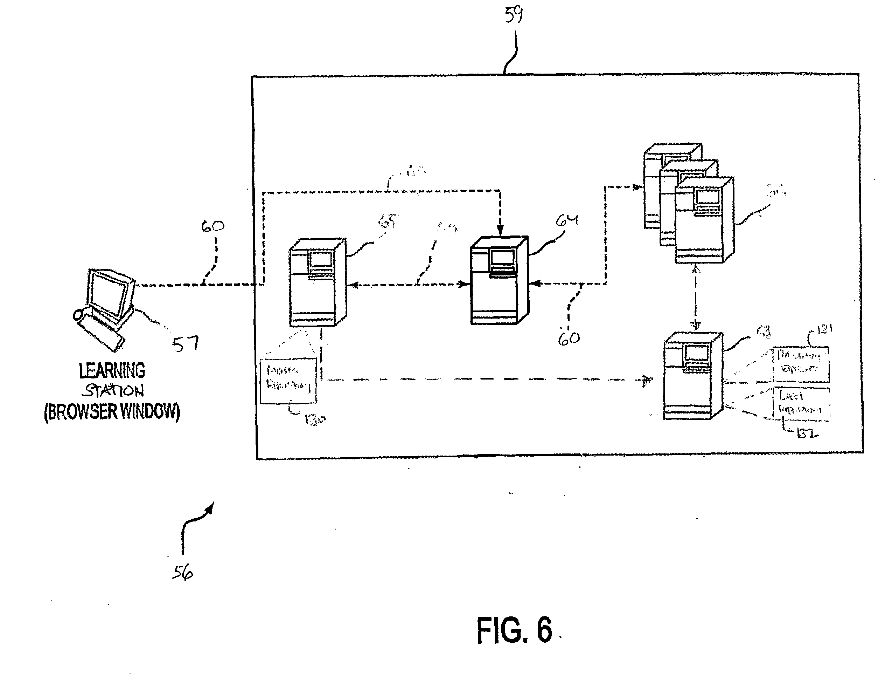

As shown in Fig. 6 an architecture 56 on which the ELS may be implemented may include a learning station 57 and a learning system 59. A user may access course material using learning station 57 (e.g., a browser). Learning station 57 may be implemented using a work station, a computer, a portable computing device, or any intelligent device capable of executing instructions and connecting to a network.

The learning station 57 may include any number of devices and/or peripherals (e.g., displays, memory/storage devices, input devices, interfaces, printers, communication cards, and speakers) that facilitate access to, and use of, course material.

Learning station 57 may execute any number of software applications, including applications that are configured to access, interpret, and present courses and related information to a user. The software may be implemented using a browser, such as, for example, Netscape communicator, Microsoft's Internet explorer, or any other software application that may be used to interpret and process a markup language, such as HTML, SGML, DHTML, or XML. The browser also may include one or more software plug-in applications that allow the browser to interpret, process, and present different types of information. The browser may include any number of application tools, such as, for example, Java, Active X, JavaScript, and Flash.

The browser may be used to access a learning portal that allows a user to access the learning system 59. Links 60 between learning station 57 and learning system 59, and among various elements of learning system 59 may be configured to send and receive signals (e.g., electrical, electromagnetic, or optical). In addition, the links may be wireless links that use electromagnetic signals (e.g., radio, infrared, to microwave) to convey information between the learning station and the learning system.

The ELS may include one or more servers. As shown in Fig. 6, the learning system 59 includes a learning management system 64, an authoring station 63, a content management system 65, and an administration management system 66.

Authoring station 63 may be a computer or other general-purpose processing device that has access to content management system 65 and administration management system 66. A memory on authoring station 63 includes a local repository. The local repository stores read-only and/or edited versions of learning objects. Use of the local repository in the ELS is described below. Any number of authoring stations may exist in the ELS.

The administration system 66 may be implemented using a server, such as, for example, the SAP R/3 4.6C + LSO Add-On. The administration system may include a database of user accounts and course information. For example, a user account may include a profile containing demographic data about the user (e.g., a name, an age, a sex, an address, a company, a school, an account number, and a bill) and his/her progress through the course material (e.g., places visited, tests completed, skills gained, knowledge acquired, and competency using the material). The administration system also may provide additional information about courses, such as the courses offered, the author/instructor of a course, and the most popular courses.

The content management system 65 may include a learning content server. The learning content server may be implemented using a WebDAV server. The learning content server may include a master content repository 130. The master content repository, also referred to herein as the "master repository", stores the learning objects described above, which are used to present a course to a user at learning station 57. The master repository stores objects that are valid throughout the entire ELS. More specifically, although different versions of objects may be stored in various local repositories, e.g., 132, only the objects stored in the master repository may be accessed by any user of the ELS. As such, an author at an authoring station must "check-in" a local version of a learning object into the master repository before that local version can be used by others in the ELS. This feature is described in more detail below.

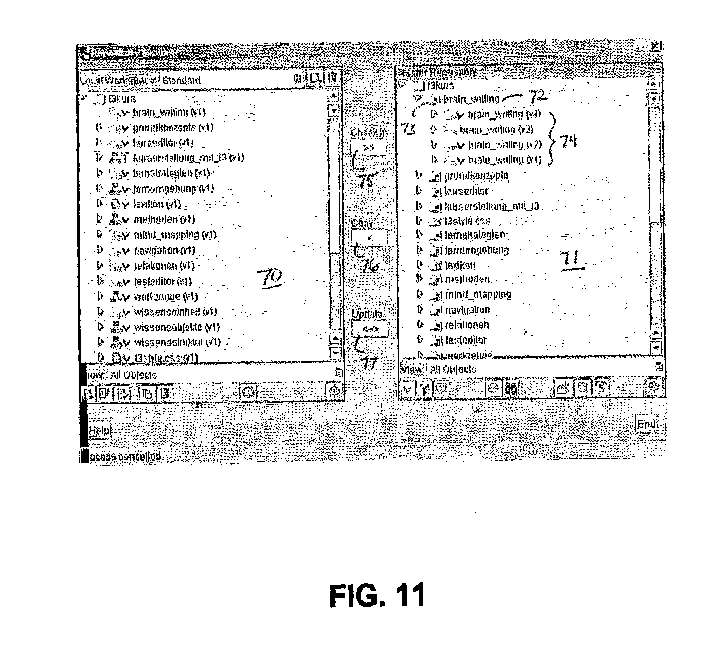

The master and local repositories may be managed via a computer program known as the repository explorer 131. The repository explorer may be run on authoring station 63, and may communicate with both a local repository and the master repository. Appropriate network connections may be used to effect communication. As shown in Fig. 11, the repository explorer includes a window 70 that displays a list of objects stored in the local repository, and window 71 that displays a list of objects stored in the master repository.

The learning management system 64 may include a content player. The content player may be implemented using software running on a server, such as, an SAP J2EE Engine. The content player obtains course material (i.e., learning objects) from the master repository and presents content from those objects to a user. The content player also applies learning strategies to the obtained course material to generate a navigation tree for the user. The navigation tree is used to suggest a route through the course material for the user and to generate a presentation of course material to the user based on the learning strategy selected by the user. The learning management system 64 also may include an interface for exchanging information with the administration system 66. For example, the content player may update user account information as the user progresses through the course material via the interface to the administration system.

### Versioning Learning Objects

In the ELS, existing learning objects may be revised and/or combined to create new versions of existing objects. What is meant by a "version", in this context, is a learning object that is derived from, or based on, another learning object. The process of creating new versions of existing learning objects is called "versioning".

Versioning of data objects is used in many technologies, including software development, document management systems, and Web site management. There are differences, however, between versioning systems used in other applications and the versioning used in the ELS. In general, versioning systems used in traditional applications have only one currently valid configuration. That is, such applications have a single version of each object for use in the application. By contrast, in the ELS, different versions of the same object can be used at the same time. Each object version "knows" on which other object versions it depends, which promotes consistency throughout the ELS.

In this implementation, the ELS supports two types of learning objects: compound objects (comprised of a set of files or documents) and atomic objects (containing only a single file or document). References between learning objects are managed and stored by the ELS. An object version A directly references an object version B if any file within object A contains a reference to any file within object B. Such references are automatically detected via appropriate link detection tools in the ELS, or are specified manually.

Object versions in the master repository cannot be changed (except by a system administrator). Users work in their local repositories, to which they can copy objects from the master repository (as read-only objects), and in which they can create and edit new object versions. Objects created in local repositories can be copied and stored back in the master repository. Storing objects from the local repository into the master repository is known as "checking-in", and is described below. The ELS also allows users to "use" objects (via references) without storing the objects in their local repositories.

So long as a user does not need to move object versions to and/or from the master repository, the user can work in a local repository without being connected to the master repository. This work model is termed the "offline scenario". Working in the local repository, while being connected to the master repository, is termed the "online scenario".

The ELS thus supports the following operations: storing (i.e., checking-in) object versions edited or created in a local repository into the master repository (thus turning them into persistent, immutable objects), copying object versions from the master repository to a local repository (as read-only objects), editing read-only objects in a local repository to create new editable object versions, and deleting objects from the local repository.

The ELS can employ two different types of versioning: explicit versioning and implicit versioning.

### Explicit Versioning

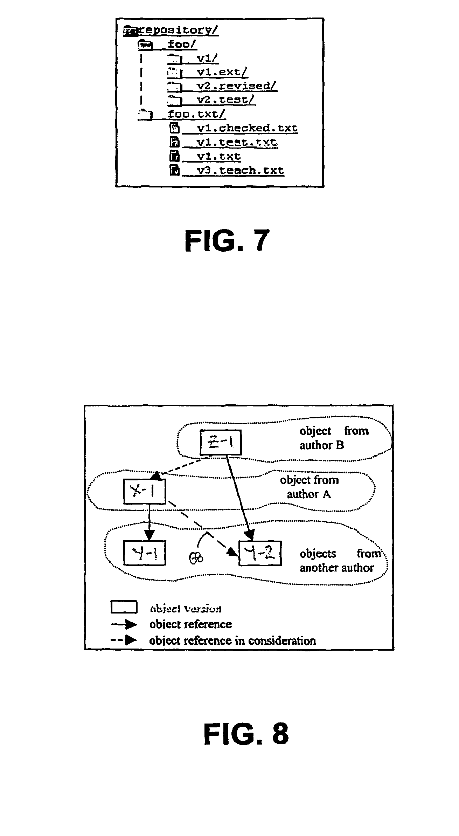

Explicit versioning associates an explicit and human-readable object location to each version of an object. The object's location is unique for all local repositories. By way of example, the ELS versions compound objects in the following manner. Assume an object with name "foo" is to be created (see Fig. 7). A folder called "foo" is created in a local repository. This folder represents the object and all its versions. The initial version of the "foo" object is stored in a subfolder named "v1/". A unique location name is assigned to each object that is derived from the original "foo" object.

Each new object version is eventually assigned a version number when it is checked-in to the master repository (a version number is not assigned at creation because versions might be changed before they are checked-in). This version number is stored in the object's metadata. Since a version number is not used prior to check-in, the author of a new version of an object may select a "technical version name" for the object. To reduce the possibility of name conflicts and to capture information about an object's version history, a predecessor object's version number and descendent object's technical version name may be used to define to the location of the descendent object. Thus, a compound object version derived, e.g., from a version with a number "2" and with a technical version name "test", may be stored in a local repository in a folder named "v2.test/". Atomic objects are versioned similarly. For example, an initial version of an object named "foo.txt" may be stored in a file named "foo.txt/v1.txt". A descendent object derived from a predecessor object with a version number "1" and with the technical version name "test" may be stored in a file named "foo.txt/v1.test.txt/". In this way, a file system such as that shown in Fig. 7 may be generated in a local repository. A similar file system may be developed in other local repositories and in the master repository.

In contrast to the file system of Fig. 7, the ELS may provide its own "filtered" view of repositories, which displays the version number of all checked-in versions. The version number, together with names of derived versions, allows authors to deduce the complete version history of an object. In an online scenario, name conflicts can be prevented by reserving a version name in the master repository each time a new version is created.

Since explicit versioning allows a local repository to store different object versions at the same time, authors can reuse specific object versions simply by creating a cross-reference using a content editor. Each time a new object version is created in the local repository, the ELS may offer assistance to adapt all cross-reference links among files that can be detected in known content formats and that are affected by any version changes.

### Implicit Versioning

The basic idea behind implicit versioning is to store information about a version instance of a referenced object in the metadata of a referencing object (without regard to the object's location). This allows object versions to be stored in the local repository without requiring version information to be attached to the object's location.

Implicit versioning employs logical and physical object locations. A logical location is the location in a repository at which the identity of an object is stored (analogous to the root of a directory). The logical object location does not contain version information. Each version of a versioned object shares the same logical location. The physical location is the location in a repository at which the actual version of a particular object is stored. In a local repository (or workspace thereof - see below), the logical location and the physical location are one in the same (since only one version of an object can be stored there at any time). In the master repository, however, the physical locations can differ from the logical, since the master repository stores all versions of an object.

Cross-references between objects do not contain version information. Instead, cross-references between objects contain both the path to a logical object location and a version identifier that corresponds to the version of the object. This information is stored in the metadata of the referring object. The ELS updates an object's metadata whenever references made by the object have changed (either due to changed content files or due to an explicit reference assignment). For example, if a reference in an object X-1 is changed from Y-1 to Y-2, the metadata of object X-1 is updated accordingly. For each version of a referenced object, the ELS also determines if that version exists in a local repository. If so, version information in the metadata of its referencing object is updated, as described below. Since new references can only originate from objects in the local repository, this process ensures that there is complete version information for all references of a given object.

Most of the time, it is sufficient to wait for an object to be saved before updating its reference version information. There is one situation, however, that may require immediate updating and, therefore, immediate object saving. That operation is deleting objects that have already been checked-in to the master repository. By way of example, suppose that an object X-1 is being edited in the local repository. Within X-1, an author changes a content file and creates a cross-reference to a file in an object Y-2, which is a copy of a checked-in object. However, the author does not yet save the content file. If the author first deletes object Y-2, and then saves the content file, it is not possible to determine the version of the newly created object reference. Therefore, in this implementation, the ELS requires that all files opened for editing must be saved before any delete operation.

### Version Conflicts

Since objects can be reused, there are a number of scenarios in which standard operations of the ELS may result in storing or using more than one version of a specific object within a local repository. This situation is called a "version conflict". Version conflicts, and resolutions described below, are applicable to implicitly versioned objects.

The ELS detects version conflicts by determining if there is more than one version of the same object in a local repository or if an object in the local repository references more than one version of the same object, and resolves the conflicts appropriately, as described below. To this end, two "conflict rules" are defined by the ELS, which are followed in each repository interaction. According to the "first rule", each object version within the master repository must be conflict free, meaning that each object version must not reference, directly or indirectly, any other object in more than one version. According to the "second rule", each local repository must be conflict free, meaning that each local repository must not contain any object in more than one version. In this context "contains" means that a version of an object is either physically stored in the local repository or is referenced from another object that is stored in the local repository.

Separation into two rules makes the conflict check process relatively easy and efficient. For example, compliance with the first rule need be checked only when new objects are checked-in to the master repository. Compliance with the second rule can be checked locally (even in an offline scenario) without regard to the master repository.

Consider the following scenario, which is depicted in Fig. 8. Author A creates a versioned object X in version 1 (X-1) that uses another object Y in version 1 (Y-1). Author B creates an object Z-1 that uses object Y in version 2 (Y-2) and now wants to use object X-1 as well. Given the second rule, author B cannot use object version X-1, since this would cause a version conflict in B's local repository. To address this problem, the ELS employs "cascading conflict resolutions". A cascading conflict resolution comprises propagating metadata, which defines references between objects, from a referencing (superior) object to a referenced (inferior) object. The metadata from the referencing object overrides existing references in the referenced object, such that all references comply with the two conflict rules noted above. In the above example, a cascading conflict resolution may be assigned to object version Z-1, so that inferior objects (e.g., X-1) must always reference/use object version Y-2 (not Y-1), as indicated by dotted arrow 68. The metadata may be propagated via the master repository when delivering content to learners or exporting content to external storage systems.

Each repository operation that creates or deletes an object version has the potential to violate a conflict rule. Accordingly, the ELS performs a conflict check (and resolution, if necessary) during each such operation. For example, the following operations implicate the second conflict rule: editing a previously checked-in object version resulting in a new version, reverting a previously editable object version to its predecessor object version, and copying any object version from the master repository to the local repository. The only action that will implicate the first conflict rule is checking-in of object versions from a local repository to the master repository. Note that the creation of new objects (in their initial version) and the deletion of checked-in object versions do not implicate the conflict rules. The following describes how each repository operation ensures compliance with the conflict rules.

Whenever a checked-in version of an object is edited in a local repository, the ELS creates a new version of that object, and the new version of the object replaces the predecessor version in the local repository. The ELS may revise all objects in the local repository with a link to the predecessor version of the object. This revision is performed by updating the referring objects'metadata with version information for the newly-created object. Content files of these objects may remain opened in any editor. If an object needs to be revised and is not editable, that object is opened for editing.

In the local repository, a user may "revert" to an earlier version object. Reverting an object to an earlier version of the object is performed by deleting the most recent version of the object. The metadata of all objects in the local repository with a link to the reverted version is automatically revised to reference the previous version. The previous version may be stored, e.g., in the master repository.

An object version that is copied from a master repository to a local repository can cause version conflicts. For example, another version of that object may already exist locally, another version of that object may be referenced by a local object, or the copied object may contain references to other objects that conflict with local objects or local object references. These types of version conflicts may be resolved interactively, e.g., by asking the user to select a preferred object version. If the user selects the local version of an object, the ELS takes no action. If the user selects a copied version, the ELS deletes a local conflicting version of the object and revises all local conflicting references accordingly.

The ELS may use "workspaces" to allow more than one version of a versioned object in the local repository. In this regard, each local repository may be separated into different workspaces. Each workspace is an area of memory that stores all objects relevant within the context of one course. Workspaces are completely independent from each other. No cross-references are created between objects from different workspaces. As such, workspaces may themselves be viewed as, and treated as, local repositories.

### Check-in Process

The operation that changes the state of the master repository, and thereby implicates the first conflict rule, is check-in of edited versions of existing objects from a local repository to the master repository. To ensure compliance with the first conflict rule, the ELS requires each object version to be checked-in together with all of its (recursively) referenced objects. Without this, any conflict checks might be incomplete since locally-referenced objects could still be changed after check-in.

A potential for conflicts exists because the ELS does not require all objects referenced by a local object version to exist in the local repository. For example, the ELS does not require an author to store large video files on the author's local file system when the author simply wants to edit some other small part of the same overall course.

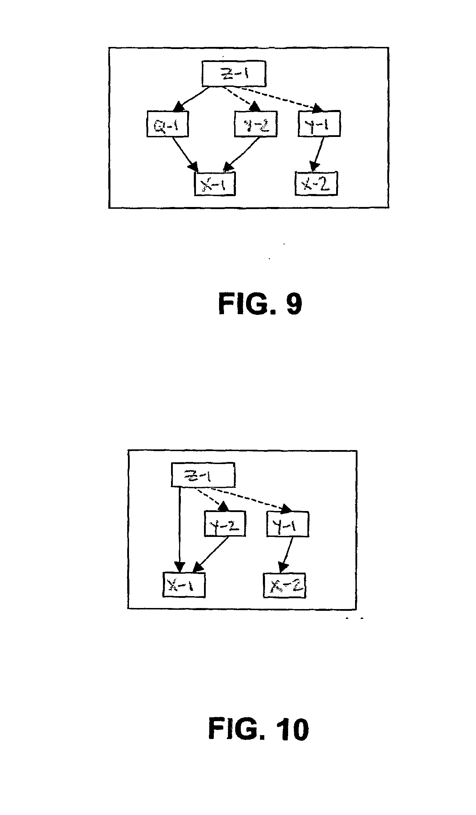

Referring to Fig. 9, the following example illustrates a scenario that leads to a version conflict at check-in. Author A edits an object version Z-1, which refers to object Q-1, which, in turn, refers to object X-1. Both objects Q-1 and X-1 have been checked-in to the master repository. The author then copies object Y-1, which refers to X-2, from the master repository to a local repository. The ELS detects a version conflict with object X-1, which the author resolves by selecting object X-1. In response, the ELS edits object Y-1, thus creating object Y-2, and revises the reference within object Y-2 to X-1. Then, the author incorporates reference to Y-2 into Z-1 and deletes objects Q-1 and X-1 in the local repository. Finally, the author reverts object Y-2 to Y-1, which automatically revises the reference in Z-1 to Y-1. If the author tries to check-in object Z-1 to the master repository, the ELS detects that Z-1 indirectly references both object X-1 and X-2.

To detect and resolve the foregoing version conflict at check-in, cascading conflict checks of the master repository are performed at check-in for the objects being checked-in. This ensures that the checked-in objects are conflict free in the master repository, i.e., that they do not cause any conflict with any of their referenced objects.

### Proxy Conflict Resolutions

There is one scenario under which the ELS restricts object reuse capabilities. Referring to Fig. 10, suppose an author creates an object Z-1 that references object X-1. Then, the author wants to incorporate an object Y-1 developed by another author into a course. Suppose also that Y-1 references X-2. When the author copies Y-1 to a local repository, the ELS detects a version conflict between X-1 and X-2. Suppose the author wants to use version X-1. Then, the ELS copy process automatically makes Y-1 editable, thus creating an object version Y-2. This may not be intended by the author who only wants to reuse Y-1. Cascading conflict resolutions are not applicable in this situation. This is because object Y-1 is not yet referenced from object Z-1 and, therefore, a cascading conflict resolution assigned to Z-1 would not reach Y-1.

"Proxy conflict resolutions" are used to resolve the foregoing type of conflict. Proxy conflict resolutions are used until an ordinary cascading conflict resolution can be assigned. A proxy conflict resolution identifies a target object (an object that induced a version conflict by one of its referenced objects) and provides a conflict resolution (a version that is to be used for all objects recursively referenced by the target object). In the above example, a proxy conflict resolution may be created that causes target object Y-1 to reference object version X-1. The ELS converts a proxy conflict resolution into a cascading conflict resolution when the target object becomes editable, i.e., the ELS postpones assigning a cascading conflict resolution until the target object is copied to the local repository. Thus, when object Y-1 is referenced by object Z-1 and becomes editable, the proxy conflict resolution is adopted by object Z-1 so that object Z-1 is provided with a cascading conflict resolution that points to object X-1.

The concept of proxy resolutions may be applied in the copy process, described above. Instead of making any local objects editable (which might have unwanted effects on their reusability), the ELS can create proxy conflict resolutions for such objects.

### Open Proxy Resolutions

Proxy conflict resolutions can result in a slight inconsistency between local and master repositories. A proxy conflict resolution has no counterpart in the master repository. Therefore, object references of checked-in objects may differ between the local and the master repository. This does not cause a problem unless it is a root object that has a proxy resolution assigned (a root object is an object that is not referenced by other local objects). In this case, an author might believe that the checking-in process is finished and delete all locally stored content. However, starting the course from the master repository would produce an unexpected result. Therefore, the ELS automatically checks all root objects for proxy resolutions. If such an object exists in the local repository, a special flag is displayed to the author indicating that there is a mismatch between the local and the master repository. Then, the author can edit the "conflicted" object manually, thereby converting the proxy resolution into an ordinary cascading conflict resolution, and finally check the new object version into the master repository.

### Repository Explorer

As noted above, a repository explorer may be used to manage versions of objects in the local and master repositories. An example window for a repository explorer is shown in Fig. 11. As shown in Fig. 11, the objects displayed in window 70 (the local repository objects) contain their version identifiers, e.g., "(v1)". The objects displayed in window 71 (the master repository objects) are stored hierarchically. For example, the object 72 titled "brain_writing" is stored as a folder 73 containing various versions 74 of the brain_writing object. The repository explorer also provides various controls to check-in 75 a version of an object to the master repository, to copy 76 an object from the master repository to the local repository, and to update 77 a repository.

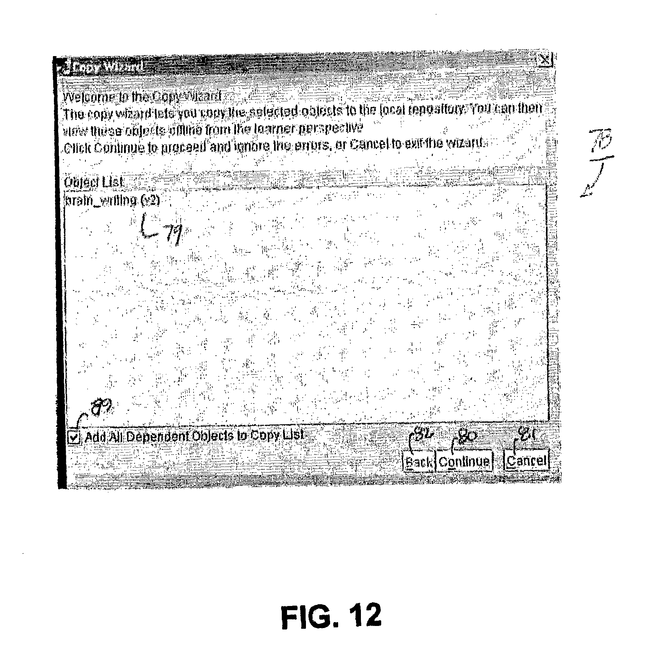

Selecting an object from the master repository window 71, and selecting copy, activates a copy wizard. The result is the window 78 shown in Fig. 12. Window 78 advises the user of the object 79 to be copied, and provides options to continue 80, cancel 81, or go back 82. Window 78 also provides a check box 89 which, when selected, causes the ELS also to copy (to the local repository) all objects that depend on the object 79 to be copied.

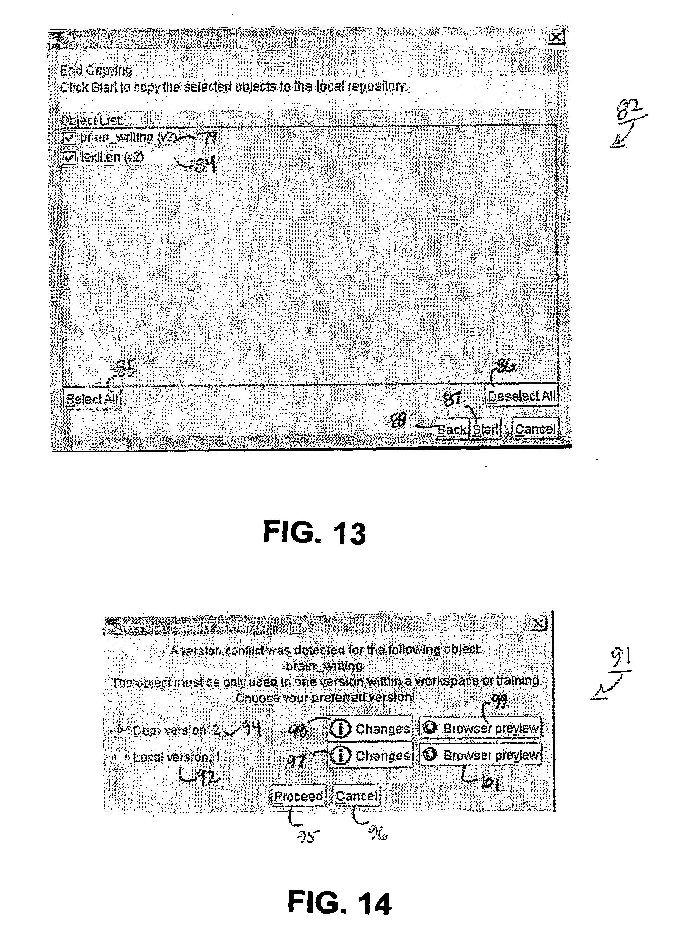

Selecting continue in window 71 results in the display of window 82 (Fig. 13). As shown in Fig. 13, window 82 lists the objects to be copied (which include the object 79 selected in window 71 and its dependent object 84). A user can select which of the listed objects to copy. Select All option 85 selects all objects to be copied. Deselect All option 86 deselects all of the objects. Start option 87 commences copying of selected objects. Back option 88 re-displays window 78, and cancel option 90 cancels the operation.

During copying, the ELS may detect a version conflict in the local repository (e.g., there may already be another version of the object in the local repository). If this is the case, the ELS will display window 91 (Fig. 14). Window 91 allows the user to select which version of the "conflicted" object to use. The user may select to use the local version (via local version option 92), in which case the copying operation is cancelled. Alternatively, the user may select to use the version from the master repository (via copy version option 94), in which case copying proceeds and the local version is deleted. Proceed option 95 allow the copy wizard to proceed and cancel 96 stops the copy wizard.

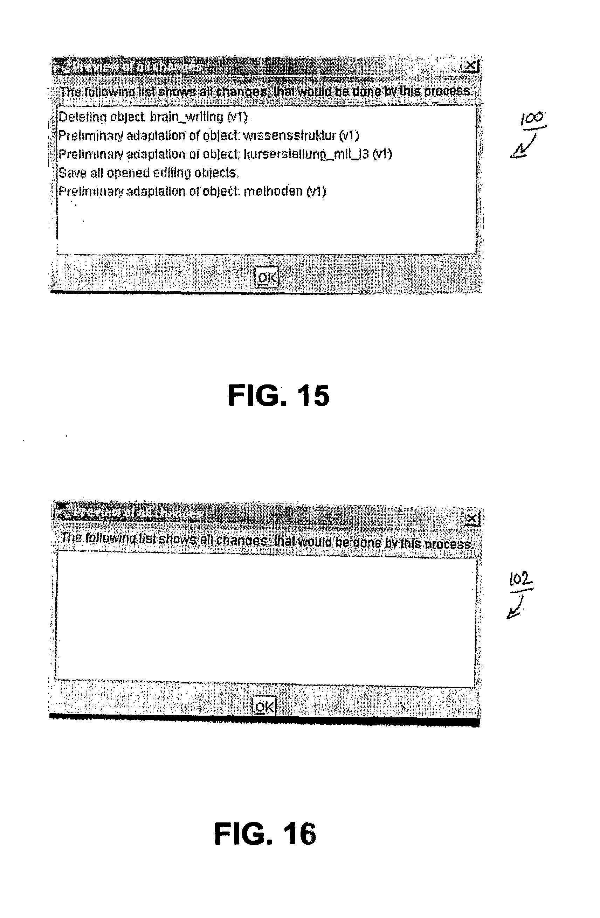

The changes options generate a list of changes to the local repository that result from current operation of the copy wizard. For example, changes option 97 next to local version option 92 generates a list of changes to the local repository that result from using the local version already on the local repository. Similarly, changes option 98 next to copy version option 94 generates a list of changes to the local repository that result from using the copied version from the master repository. Browser preview option 99 (next to changes option 98) generates a browser preview of the copy version's content. Similarly, browser preview option 101 (next to changes option 97) generates a browser preview of the local version's content. Window 100 shown in Fig. 15 shows a list of changes to the local repository that result from using the copied version from the master repository. Window 102 shown in Fig. 16 shows a list of changes to the local repository that result from using the local version. Since the local version requires no changes, none are displayed here.

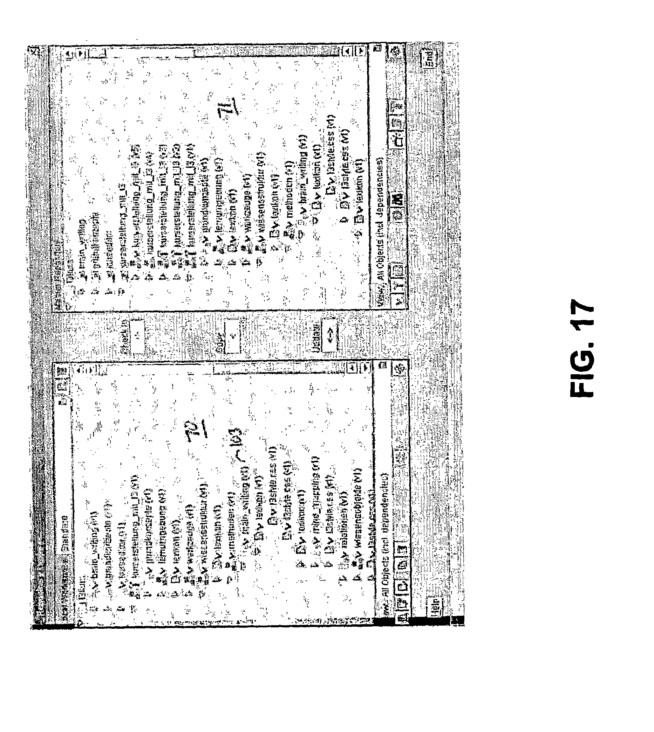

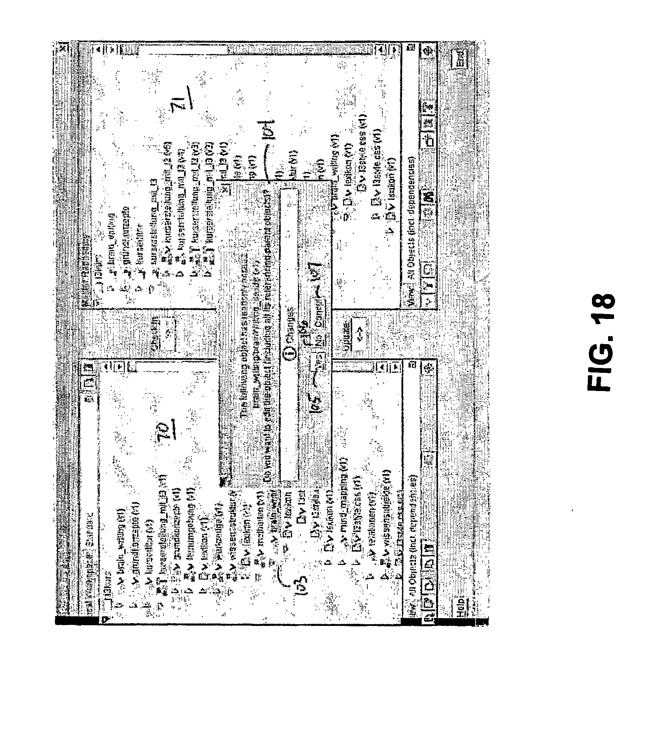

The repository explorer also may be used to edit objects in the local repository. As shown in Fig. 17, the repository explorer displays lists of objects in windows 70 and 71. A user may select one of those objects, such as object 103 (entitled "brain_writing(v1)") in Fig. 18. The object may be selected, e.g., by double-clicking on the object using a mouse. When an object is selected, the ELS displays dialog box 104. Dialog box 104 provides the user with options to edit the object and all of the objects that reference it (Yes option 105), not to edit the object (No option 106), and to cancel the operation (Cancel option 107).

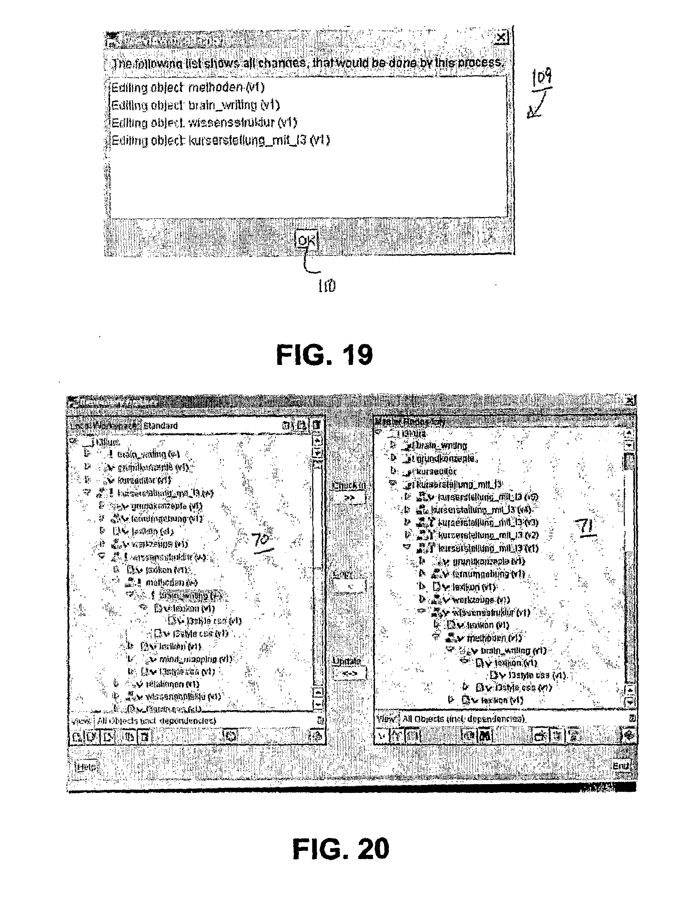

If the user elects to edit the object(s), the ELS displays the window 109 shown in Fig. 19. Window 109 provides a list of all objects that will be changed as a result of editing the selected brain_writing(v1) object, where (v1) indicates version "1". In particular, the metadata of the objects that reference the brain_writing(v1) object (namely, methoden, wissensstruktur, and kurserstellung) will be modified so that those objects now reference the new version of the brain_writing object, which will result from edits to the existing version of the brain_writing object(v1). Clicking on "OK" option 110 allows the user to perform appropriate edits on the brain_writing object.

After editing brain_writing(v1) object 103, the ELS modifies its display of window 70 to that shown in Fig. 20. In particular, the versions of the affected objects (namely, brain_writing, methoden, wissensstruktur, and kurserstellung) remain unspecified in the local repository. This is shown by the "(v-)" symbol next to each of those objects. This is because, as noted above, version numbers are assigned only upon check-in to the master repository. Until that occurs, the affected objects in the local repository will not be assigned specific ELS-wide versions numbers.

### Other Implementations

The ELS is not limited to use with the hardware and software descried herein; it may find applicability in any computing or processing environment and with any type of machine that is capable of running machine-readable instructions, such as a computer program.

The ELS can be implemented in digital electronic circuitry, or in computer hardware, firmware, software, or in combinations of them. The ELS can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the ELS can be performed by one or more programmable processors executing a computer program to perform functions of the ELS by operating on input data and generating output. Method steps can also be performed by, and the ELS can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer include a processor for executing instructions and one or more memory devices for storing instructions and data. Generally, a computer will also include, or be operatively coupled to receive data from, or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

The ELS can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the record extractor, or any combination of such back-end, middleware, or front-end components. The components of the system can be interconnected by any form or medium of digital data communication, e.g., a communication network. Examples of communication networks include a local area network ("LAN") and a wide area network (WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The processes described above are not limited to the implementations set forth herein. For example, the processes are not limited to use with the ELS described herein, but rather may be implemented in any type of computer-based training system. The processes can be applied to any computer based information system in which information objects, elements, etc. are to be versioned and in which cross-references between different entities are maintained.

## Claims

1. A method for use in an electronic learning system that manages versioned learning objects in a master repository (130) storing the learning objects that are valid throughout the electronic learning system to be accessed by any user of the electronic learning system and in a local repository (132) for storing a local version of the object to create and edit new learning object versions which can be checked-in to the master repository (130) by storing,
wherein the learning objects comprise at least one referencing learning object and at least one referenced learning object which is referenced by the referencing learning object,
wherein the referencing learning object has metadata which stores a reference to the referenced learning object; the method comprising:
defining two conflict rules as follows:
- according to a first conflict rule, each learning object version within the master repository (130) must not reference, directly or indirectly, any other learning object in more than one version; and
- according to a second conflict rule, each local repository (132) must not contain any learning object in more than one version;
detecting a version conflict associated with a learning object by checking for compliance with both of the two conflict rules during each creation of a version of the learning object and each deletion of a version of the learning object; and
resolving the version conflict by ensuring compliance with the two conflict rules, comprising:
- when a checked-in version of a learning object is edited in a local repository (132):
- - creating a new version of the learning object,
- - replacing the checked-in version with the new version, and
- - updating metadata of each object referring to the learning object with version information for the new version of the learning object;
- when reverting to an earlier version of a learning object:
- - deleting the most recent version of the learning object;
- - revising metadata of all objects in the local repository (132) that refer to the most recent version of the learning object to refer to the earlier version of the learning object;
- when checking-in edited versions of existing learning objects from the local repository (132) to the master repository (130), requiring each learning object version to be checked in with all recursively referenced learning objects of the learning object version.

2. The method of claim 1, wherein resolving comprises postponing conflict resolution until the learning object becomes editable.

3. A computer program product for use in an electronic learning system, wherein the computer program product manages versioned learning objects in a master repository (130) and in a local repository (132) according to the method of claim 1 or 2.

4. An electronic learning system (59), comprising:
a master repository (130) which stores existing versions of learning objects being valid throughout the electronic learning system to be accessed by any user of the electronic learning system;
a local repository (132) which locally stores alternate versions of the learning objects stored in the master repository (130), wherein the local repository (132) allows creation and editing of new learning object versions which can be checked-in to the master repository (130) by storing; and
a processor that executes instructions to perform the steps of the method according to claim 1 or 2.

5. The electronic learning system (59) of claim 4, wherein resolving comprises postponing assignment of the cascading conflict resolution until the alternate version of the learning object becomes editable.

6. The electronic learning system (59) of claim 4 or 5, wherein the local repository (132) is divided into workspaces, each of the workspaces including alternate versions of the learning objects stored in the master repository (130), learning objects stored in one workspace not referencing learning objects stored in another workspace.

7. The electronic learning system (59) of one of the preceding claims 4 to 6, wherein the processor creates the alternate version of the object by either
(a) copying an existing version of the object from the master repository (130) to the local repository (132), or
(b) generating the alternate object in the local repository (132).

## Patentansprüche

1. Verfahren zur Verwendung in einem elektronischen Lernsystem, das versionierte Lernobjekte in einem Haupt-Repository (130), das die Lernobjekte speichert, die während des gesamten elektronischen Lernsystems gültig sind, um für einen bzw. jeden Benutzer des elektronischen Lernsystems zugänglich zu sein, und in einem lokalen Repository (132) zum Speichern einer lokalen Version des Objekts verwaltet, um neue Lernobjektversionen zu erzeugen und zu editieren, die in das Haupt-Repository (130) durch Speichern eingecheckt werden können,
wobei die Lernobjekte zumindest ein referenzierendes Lernobjekt und zumindest ein referenziertes Lernobjekt umfassen, das von dem referenzierenden Lernobjekt referenziert wird,
wobei das referenzierende Lernobjekt Metadaten aufweist, die eine Referenz zu dem referenzierten Lernobjekt speichern; wobei das Verfahren umfasst:
Definieren von zwei Konfliktregeln wie folgt:
- gemäß einer ersten Konfliktregel darf keine Lernobjektversion innerhalb des Haupt-Repository (130) ein anderes Lernobjekt in mehr als einer Version direkt oder indirekt referenzieren;
- gemäß einer zweiten Konfliktregel darf kein lokales Repository (132) ein Lernobjekt in mehr als einer Version enthalten;
Detektieren eines Versionenkonflikts, der mit einem Lernobjekt assoziiert bzw. verknüpft ist, durch Überprüfen der Einhaltung von beiden der zwei Konfliktregeln während jeder Erzeugung einer Version des Lernobjekts und jedem Löschen einer Version des Lernobjekts; und
Lösen des Versionenkonflikts durch Sicherstellen der Einhaltung der beiden Konfliktregeln, umfassend:
- wenn eine eingecheckte Version eines Lernobjekts in einem lokalen Repository (132) editiert wird:
- - Erzeugen einer neuen Version des Lernobjekts,
- - Ersetzen der eingecheckten Version mit der neuen Version, und
- - Aktualisieren von Metadaten jedes Objekts, welches sich auf das Lernobjekt bezieht, mit Versionsinformationen für die neue Version des Lernobjekts;
- wenn zu einer früheren Version eines Lernobjekts zurückgekehrt wird:
- - Löschen der aktuellsten Version des Lernobjekts;
- - Revidieren von Metadaten aller Objekte in dem lokalen Repository (132), welche sich auf die aktuellste Version des Lernobjekts beziehen, um sich auf die frühere Version des Lernobjekts zu beziehen
- wenn editierte Versionen von existierenden Lernobjekten aus dem lokalen Repository (132) in das Haupt-Repository (130) eingecheckt werden, Verlangen, dass jede Lernobjektversion mit allen rekursiv referenzierten Lernobjekten der Lernobjektversion eingecheckt wird.

2. Verfahren nach Anspruch 1, wobei das Lösen ein Verschieben der Konfliktlösung, bis das Lernobjekt editierbar wird, umfasst.

3. Computerprogrammprodukt zur Verwendung in einem elektronischen Lernsystem, wobei das Computerprogrammprodukt versionierte Lernobjekt in einem Haupt-Repository (130) und in einem lokalen Repository (132) gemäß dem Verfahren nach Anspruch 1 oder 2 verwaltet.

4. Elektronisches Lernsystem (59), umfassend:
ein Haupt-Repository (130), das existierende Versionen von Lernobjekten speichert, die während des gesamten elektronischen Lernsystems gültig sind,
um für einen bzw. jeden Benutzer des elektronischen Lernsystems zugänglich zu sein;
ein lokales Repository (132), das alternative Versionen der in dem Haupt-Repository (130) gespeicherten Lernobjekte lokal speichert, wobei das lokale Repository (132) das Erzeugen und Editieren von neuen Lernobjektversionen erlaubt, die in das Haupt-Repository (130) durch Speichern eingecheckt werden können; und
einen Prozessor, der Instruktionen ausführt, um die Schritte des Verfahrens nach Anspruch 1 oder 2 durchzuführen.

5. Elektronisches Lernsystem (59) nach Anspruch 4, wobei das Lösen ein Verschieben der Zuweisung der kaskadierenden Konfliktlösung, bis die alternative Version des Lernobjekts editierbar wird, umfasst.

6. Elektronisches Lernsystem (59) nach Anspruch 4 oder 5, wobei das lokale Repository (132) in Arbeitsräume unterteilt ist, wobei jeder der Arbeitsräume alternative Versionen der Lernobjekte enthält, die in dem Haupt-Repository (130) gespeichert sind, wobei Lernobjekte, die in einem Arbeitsraum gespeichert sind, keine Lernobjekte referenzieren, die in einem anderen Arbeitsraum gespeichert sind.

7. Elektronisches Lernsystem (59) nach einem der Ansprüche 4 bis 6, wobei der Prozessor die alternative Version des Objekts erzeugt durch
(a) Kopieren einer existierenden Version des Objekts aus dem Haupt-Repository (130) in das lokale Repository (132) oder
(b) Erzeugen des alternativen Objekts in dem lokalen Repository (132).

## Revendications

1. Procédé destiné à être utilisé dans un système d'apprentissage électronique qui gère des objets d'apprentissage versionnés dans un référentiel maître (130) stockant les objets d'apprentissage qui sont valables dans l'ensemble du système d'apprentissage électronique devant être accédé par tout utilisateur du système d'apprentissage électronique et dans un référentiel local (132) pour stocker une version locale de l'objet afin de créer et modifier de nouvelles versions d'objet d'apprentissage qui peuvent être archivées vers le référentiel maître (130) par stockage,
dans lequel les objets d'apprentissage comprennent au moins un objet d'apprentissage de référencement et au moins un objet d'apprentissage référencé qui est référencé par l'objet d'apprentissage de référencement,
dans lequel l'objet d'apprentissage de référencement a des métadonnées qui stockent une référence vers l'objet d'apprentissage référencé ; le procédé comprenant :
définir deux règles de conflit comme suit :
- en fonction d'une première règle de conflit, chaque version d'objet d'apprentissage au sein du référentiel maître (130) ne doit pas référencer, directement ou indirectement, tout autre objet d'apprentissage dans plus d'une version ; et
- en fonction d'une seconde règle de conflit, chaque référentiel local (132) ne doit pas contenir d'objet d'apprentissage dans plus d'une version ;
détecter un conflit de version associé à un objet d'apprentissage en vérifiant la conformité avec les deux règles de conflit au cours de chaque création d'une version de l'objet d'apprentissage et chaque effacement d'une version de l'objet d'apprentissage ; et
résoudre le conflit de version en garantissant la conformité avec les deux règles de conflit, comprenant :
- lorsqu'une version archivée d'un objet d'apprentissage est modifiée dans un référentiel local (132) :
- - créer une nouvelle version de l'objet d'apprentissage,
- - remplacer la version archivée par la nouvelle version, et
- - mettre à jour des métadonnées de chaque objet se référant à l'objet d'apprentissage avec des informations de version pour la nouvelle version de l'objet d'apprentissage ;
- lors du retour à une version antérieure d'un objet d'apprentissage :
- - effacer la version la plus récente de l'objet d'apprentissage ;
- - réviser des métadonnées de l'ensemble des objets dans le référentiel local (132) qui se réfèrent à la version la plus récente de l'objet d'apprentissage pour se référer à la version antérieure de l'objet d'apprentissage ;
- lors de l'archivage de versions modifiées d'objets d'apprentissage existants du référentiel local (132) vers le référentiel maître (130), nécessiter l'archivage de chaque version d'objet d'apprentissage avec l'ensemble des objets d'apprentissage référencés de manière récursive de la version d'objet d'apprentissage.

2. Procédé selon la revendication 1, dans lequel résoudre comprend retarder la résolution de conflit jusqu'à ce que l'objet d'apprentissage devienne modifiable.

3. Produit de programme informatique destiné à être utilisé dans un système d'apprentissage électronique, dans lequel le produit de programme informatique gère des objets d'apprentissage versionnés dans un référentiel maître (130) et dans un référentiel local (132) conformément au procédé selon la revendication 1 ou 2.

4. Système d'apprentissage électronique (59) comprenant :
un référentiel maître (130) qui stocke des versions existantes d'objets d'apprentissage qui sont valables dans l'ensemble du système d'apprentissage électronique devant être accédé par tout utilisateur du système d'apprentissage électronique ;
un référentiel local (132) qui stocke localement des variantes de versions des objets d'apprentissage stockés dans le référentiel maître (130), dans lequel le référentiel local (132) permet la création et la modification de nouvelles versions d'objet d'apprentissage qui peuvent être archivées vers le référentiel maître (130) par stockage ; et
un processeur qui exécute des instructions pour réaliser les étapes du procédé selon la revendication 1 ou 2.

5. Système d'apprentissage électronique (59) selon la revendication 4, dans lequel résoudre comprend retarder l'attribution de la résolution de conflit en cascade jusqu'à la variante de version de l'objet d'apprentissage devienne modifiable.

6. Système d'apprentissage électronique (59) selon la revendication 4 ou 5, dans lequel le référentiel local (132) est divisé en espaces de travail, chacun des espaces de travail incluant des variantes de versions des objets d'apprentissage stockés dans le référentiel maître (130), des objets d'apprentissage stockés dans un espace de travail ne référençant pas des objets d'apprentissage stockés dans un autre espace de travail.

7. Système d'apprentissage électronique (59) selon une des revendications précédentes 4 à 6, dans lequel le processeur crée la variante de version de l'objet en
(a) copiant une version existante de l'objet du référentiel maître (130) vers le référentiel local (132), ou
(b) générant la variante d'objet dans le référentiel local (132).
